# FASCICULE DE BREVET EUROPEEN

(11) **EP 0 424 754 B1**
(45) Date de publication et mention de la délivrance du brevet: **11.08.1993**
(21) Numéro de dépôt: 90119593.3
(22) Date de dépôt: 12.10.1990
(51) Int. Cl.: G01P 1/00, G01D 11/10

(54) **Capteur de mesure d'une grandeur physique**
Sensor für eine physische Grösse
Sensor for physical parameters

(30) Priorité: 25.10.1989 FR 8914103
(43) Date de publication de la demande: 02.05.1991
(73) Titulaire: ASULAB S.A., CH-2501 Bienne (CH)
(72) Inventeur: Froidevaux, Raymond, CH-2017 Boudry (CH); Frossard, Rémy, CH-2006 Neuchâtel (CH)
(74) Mandataire: Caron, Gérard

(56) Documents cités:
- WO-A-87/05704
- DE-A- 1 816 998
- DE-A- 2 014 210
- DE-A- 2 225 945
- DE-A- 2 655 604
- FR-A- 2 192 306
- ELECTRONIC DESIGN. vol. 26, no. 4, 15 février 1978, HASBROUCK HEIGHTS, N pages 36 - 37; "IC accelerometer-so tiny,it monitors the heart from within"
- IRE WESCON CONVENTION RECORD. vol. 25, no. 15/3, 09 1981, NORTH HOLLYWOOD US pages 1 - 4; R.M. Whittier et al: "Application of silicon strain gauge technology to aerospace acceleration and pressure measurements"

## Description

L'invention concerne un capteur de mesure d'une grandeur physique, qui peut être soit une pression, par exemple, soit une accélération.

On connaît déjà de tels capteurs, notamment dans le domaine de l'automobile, où l'on dispose des accéléromètres dans un véhicule pour mesurer les accélérations subies par celui-ci et modifier en conséquence certains paramètres.

De façon classique, ces accéléromètres comprennent un support fixé en porte-à-faux sur un bâti et supportant à son extrémité libre une masse. Sous l'action d'une accélération, la masse se déplace en déformant le support. Ces déformations sont enregistrées par un ou plusieurs capteurs, tels que des jauges de contrainte, disposés de préférence, de part et d'autre du support et qui envoient une information sous forme d'une variation de fréquence, vers un circuit électronique qui traite ensuite l'information.

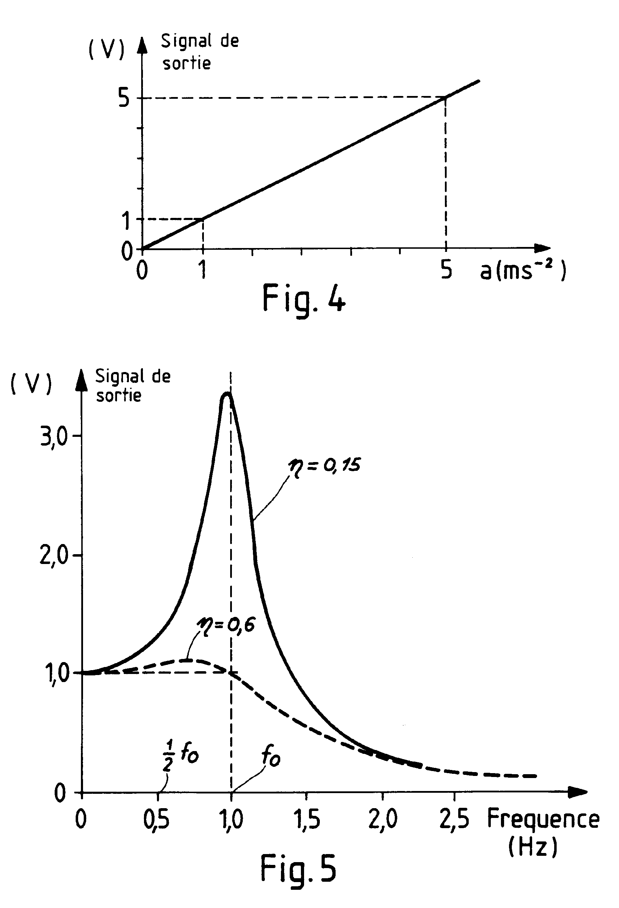

Comme illustré en figure 4 des dessins annexés, la courbe représentant l'accélération subie par le véhicule en fonction du signal de sortie obtenu au niveau du circuit électronique est normalement une droite. En d'autres termes, l'amplitude de déplacement du support de la masse (et donc le signal de sortie) sont proportionnels à l'accélération subie. Toutefois, on constate, comme illustré en figure 5, que cette proportionnalité entre l'accélération et le signal de sortie n'est plus respectée pour des fréquences de vibration élevées. La courbe en trait plein représente justement, pour une accélération constante donnée, les variations observées au niveau du signal de sortie au fur et à mesure de l'accroissement des fréquences de vibration du support de la masse. Le tout début de la courbe est une droite horizontale, correspondant à un signal de sortie constant au contraire le reste de la courbe est inexploitable, puisque le signal de sortie varie énormément, notamment au niveau de la fréquence fₒ correspondant à la fréquence de résonnance du support. Il est donc souhaitable pour obtenir des mesures fiables et précises de munir l'accéléromètre d'un dispositif d'amortissement permettant de supprimer le pic correspondant à la fréquence du résonnance fₒ. En conséquence, de nombreux accéléromètres possèdent un tel dispositif d'armortissement.

On connaît déjà, d'après la demande de brevet WO-A-87/06 347 un dispositif d'amortissement par courants de Foucault. Ce dispositif comprend un ressort à lame à l'extrémité libre duquel est disposé un disque à courants de Foucault constituant une masse et dont le mouvement est amorti par des aimants de polarités différentes, dont les pôles de même polarité sont en opposition. Un tel dispositif est toutefois onéreux et complexe à fabriquer.

En effet, pour être efficaces, les aimants doivent être réalisés en un matériau à haut produit d'énergie (BxH élevé) tel que le Samarium-Cobalt. Par ailleurs, dans ce genre de dispositifs, l'entrefer doit être très petit, ce qui demande un montage extrêmement précis à l'abri de la poussière.

On connaît également, d'après le brevet US-A-4 751 849, un accéléromètre dans lequel la masse et la poutre supportant cette masse sont logées dans un boîtier hermétique qui peut être mis sous vide ou rempli d'un gaz inerte. Cependant, cet accéléromètre ne comporte pas de moyens d'amortissement des mouvements de sa masse.

On connaît en outre, d'après la demande de brevet FR-A-2 192 306, un accéléromètre, dont une variant d'exécution possède à titre complémentaire un dispositif d'amortissement : une poutre, une masse oscillante, - de révolution autour d'un axe sensiblement parallèle à l'axe de symétrie de la poutre -, et un manchon entourant ladite masse sont enfermés dans un carter rempli d'un fluide visqueux. La quantité de fluide visqueux contenu dans l'espace annulaire ouvert ainsi délimité assure l'amortissement. Selon ce dispositif les volumes de fluide visqueux contenus dans les espaces situés de part et d'autre de l'ensemble masse oscillante - manchon sont importants et inégaux; d'autre part les variations de la viscosité du fluide en fonction de la température ont nécessairement une influence sur les caractéristiques de l'amortissement.

En conséquence, l'invention a pour but de réaliser un capteur de mesure d'une grandeur physique et notamment un accéléromètre, muni d'un moyen d'amortissement qui permette d'obtenir un amortissement efficace des oscillations de la poutre déformable sous l'action de ladite grandeur physique, afin de réaliser ainsi des mesures fiables et précises sur la plus grande gamme de fréquences possibles, à des intervalles de temps très rapprochés, et indépendamment de la température.

Ce but est atteint à l'aide d'un capteur de mesure d'une grandeur physique muni d'un dispositif d'amortissement, capteur du type comprenant un bâti, au moins un élément déformable sous l'action de ladite grandeur physique monté sur le bâti, une masse reliée à l'élément déformable, un carter entourant la masse et au moins partiellement l'élément déformable, ce carter étant fixé sur le bâti, et des moyens de mesure montés sur l'élément déformable pour en mesurer la déformation, caractérisé en ce que le carter définit autour de la masse, d'une part, deux chambres de fluide dont les volumes respectifs varient de façon identique et antagoniste lors de la déformation de l'élément et, d'autre part, au moins un passage mettant en communication les deux chambres et opposant une résistance à l'écoulement du fluide d'une chambre à l'autre.

L'invention sera mieux comprise à l'aide de la description suivante d'un mode de réalisation préférentiel de l'invention, donné à titre d'exemple illustratif mais non limitatif, et des dessins annexés dans lesquels :
- la figure 1 représente une vue en coupe du capteur selon l'invention,
- la figure 2 représente une coupe selon la ligne II-II de la figure 1,
- la figure 3 représente l'accélération en g en fonction du temps en millisecondes,
- la figure 4 est une courbe représentant l'accélération en m/s² en fonction du signal de sortie en volts, et
- la figure 5 est une courbe représentant, pour une accélération constante donnée, le signal de sortie en volts en fonction de la fréquence en hertz.

Le capteur de mesure d'une grandeur physique, selon l'invention, peut être utilisé pour mesurer une accélération, une force ou encore une pression, par exemple. La première partie de la description sera donc consacrée à un accéléromètre et la deuxième à un capteur de force.

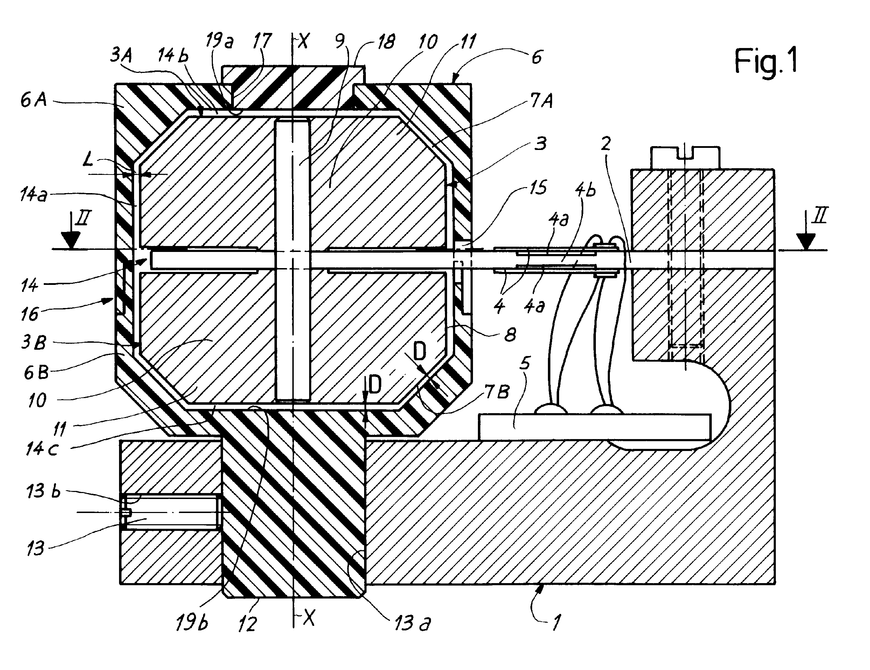

L'accéléromètre comprend de façon classique un bâti 1, un élément déformable sous l'action de l'accélération, ici une poutre 2, et une masse 3 fixée sur ladite poutre. Dans le mode de réalisation représenté en figure 1, la poutre 2 est fixée en porte-à-faux sur le bâti et la masse 3 qui a ici une forme générale cylindrique, est fixée sensiblement à son extrémité libre. On pourrait également prévoir que la poutre soit fixée par ses deux extrémités au bâti et que la masse soit disposée sensiblement au centre de la poutre.

On pourrait aussi remplacer la poutre 2, par deux poutres ou plus, fixées au bâti l'une en-dessous de l'autre, parallèlement, la masse 3 étant fixée sur leurs extrémités libres. On autorise ainsi les déplacements de la masse dans la direction de son axe longitudinal, mais on limite ses déplacements perpendiculairement à cette direction, ce qui permet également de protéger les moyens de mesure 4 fixés sur lesdites poutres.

Sous l'action d'une accélération, la masse 3 est déplacée vers le haut ou le bas (par rapport à la figure 1) ce qui entraîne une déformation de la poutre 2 sur laquelle elle est fixée. Cette déformation est détectée par des moyens de mesure 4 constitués, par exemple, par deux résonateurs à quartz en forme de double diapason montés de part et d'autre de la poutre. Les résonateurs sont connectés à un circuit électronique 5 monté directement sur le bâti 1. De façon connue en soi, les résonateurs sont connectés dans des circuits oscillants dont les fréquences de résonnance varient en fonction de leur déformation due à la déformation de la poutre 2. Les circuits résonnants délivrent des signaux qui sont traités et analysés dans le circuit 5. Celui-ci délivre un signal variable en fréquence en fonction de la déformation de la poutre 2 et donc de l'accélération subie par la masse 3. On pourrait remplacer ces résonateurs à quartz par d'autres moyens de mesure tels que des jauges de contrainte, par exemple.

Il est en outre à noter qu'à l'endroit où sont montés les résonateurs 4, la poutre comporte sur chacune de ses grandes faces, une rainure 4a définissant dans la poutre une zone 4b de plus faible épaisseur.

Afin de réaliser l'amortissement des oscillations de la poutre, un carter 6 est disposé autour de la masse de façon à définir, d'une part, deux chambres 7A, 7B de fluide entre la surface extérieure de la masse et l'intérieur dudit carter et, d'autre part, un passage 8 mettant en communication les deux chambres 7A, 7B et opposant une résistance à l'écoulement du fluide d'une chambre à l'autre.

De façon plus précise, la masse se compose de deux demi-masses 3A, 3B fixées à l'extrémité de la poutre 2, de part et d'autre de celle-ci, par l'intermédiaire d'une goupille 9 disposée le long de l'axe de révolution X-X des deux demi-masses, sensiblement perpendiculairement à la poutre. Chaque demi-masse comprend, faits d'une seule pièce, un corps cylindrique 10 appliqué sur la poutre et une partie tronconique 11 entourée par la partie d'extrémité correspondante du carter. On pourrait bien sûr utiliser une masse se composant de plus de deux pièces ou présentant une autre forme, cubique, par exemple.

Le carter 6 présente une surface extérieure, de préférence cylindrique, dont la partie inférieure possède un moyen de fixation sur le bâti. De façon avantageuse, ce moyen de fixation est un tenon 12 bloqué par une vis 13 dans un orifice 13a du bâti, la vis étant engagée dans un trou 13b du bâti. Le carter pourrait être fixé sur le bâti par un autre moyen de fixation et en un autre point de sa périphérie.

Ce carter définit un logement 14 dans lequel est placée la masse 3 et au moins une partie de la poutre 2. La forme intérieure du logement est complémentaire de la forme de la masse 3, c'est-à-dire que le logement présente une partie médiane cylindrique 14a et deux parties d'extrémité, tronconiques 14b, 14c. Les angles de révolution des troncs de cône de l'intérieur du carter et de chaque demi-masse sont donc sensiblement identiques. Cette complémentarité de forme facilite, au cours du montage de l'ensemble, le centrage du carter sur les demi-masses, plus précisément par rapport à l'axe de révolution X-X de celles-ci.

Le carter présente en outre une ouverture 15 pour le passage de la poutre.

Selon une caractéristique avantageuse de l'invention et afin de faciliter le montage, le carter se compose de deux pots 6A, 6B correspondant chacun sensiblement à la moitié du carter et présentant des organes d'accouplement complémentaires 16. Ces organes sont par exemple des collerettes complémentaires et les deux pots peuvent alors être assemblés par emboîtage. De même, pour faciliter le montage, l'un des pots 6A, 6B comprend une ouverture de passage 17 de la goupille 9, obstruée par un bouchon 18.

Lorsque le carter est en deux parties, l'un au moins des pots 6A, 6B présente une encoche pour constituer l'ouverture 15 pour le passage de la poutre.

Enfin, on notera que chaque face d'extrémité intérieure du carter perpendiculaire à l'axe X-X, respectivement de chaque pot constitue une butée 19a, 19b pour la masse 3 lors des excursions dans les deux sens de la poutre 2.

De préférence, on réalisera le carter 6 en matériau synthétique, la masse 3 en aluminium et l'élément déformable (c'est-à-dire la poutre 2) en une matière ayant le même coefficient de dilatation que les moyens de mesure 4, c'est-à-dire par exemple un acier comportant du nickel et du chrome.

Le fonctionnement du dispositif va maintenant être décrit plus précisément.

Le fluide contenu entre la masse et le carter est de préférence celui de l'environnement du capteur puisque le carter comprend l'ouverture 15. La plupart du temps, l'air ambiant formera donc ce fluide. De plus, l'air présente l'avantage par rapport à d'autres fluides, tels que l'huile, par exemple, d'être beaucoup moins sensible aux variations de température et de ne pas présenter d'aussi grandes variations de viscosité. Toutefois, on pourrait prévoir, à l'endroit où la poutre passe à travers le carter, un organe d'étanchéité fermant l'ouverture 15, tout en autorisant les vibrations de la poutre malgré le passage de celle-ci à travers le carter. On pourrait alors remplir le carter d'un autre gaz.

La hauteur du logement 14 défini par le carter est légèrement supérieure à la somme des hauteurs de chaque demi-masse 3A, 3B et de la poutre 2, ce qui définit les deux chambres 7A, 7B remplies du fluide. Lorsque les pièces sont partiellement tronconiques, comme c'est le cas ici, on entend par "chambre" le volume délimité entre, d'une part, le fond et la surface tronconique de chaque demi-pot 6A et 6B et, d'autre part, la surface d'extrémité et la surface tronconique de chaque demi-masse 3A, 3B, respectivement. Par ailleurs, on entend par "passage 8", le volume délimité entre les faces cylindriques respectivement intérieure et extérieure des pots 6A, 6B et des demi-masses 3A, 3B.

Lorsque la masse 3 se déplace vers le haut, la chambre supérieure 7A se vide d'une certaine quantité de fluide, qui se trouve chassée à travers le passage 8 vers la chambre inférieure 7B dont le volume augmente de la même quantité, la circulation du fluide étant inverse lorsque la masse se déplace en sens opposé. Les volumes respectifs des chambres varient donc de façon identique et antagoniste.

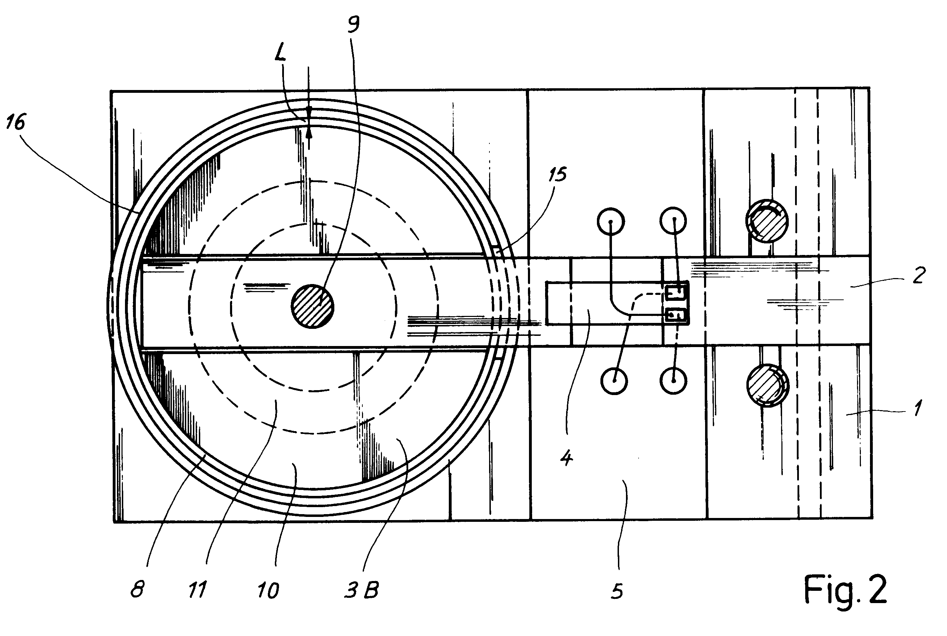

Comme illustré en figure 2, le passage de mise en communication des deux chambres 7A et 7B est périphérique (ici annulaire). De préférence, la largeur (L) du passage 8 est de l'ordre de 0,05 à 0,1 mm, ou mieux 0,08 mm. (Elle est donc fortement exagérée sur les figures). On pourrait prévoir aussi un ou plusieurs autres passages, par exemple en perçant des canaux verticaux dans chaque demi-masse, ces canaux débouchant respectivement dans les chambres 7A et 7B.

Il est important que la distance D entre la surface d'extrémité et la surface tronconique de chaque demi-masse 3A, 3B et le fond et la surface tronconique de chaque demi-pot 6A, 6B soit faible, afin que les chambres 7A et 7B ne contiennent qu'une faible quantité de fluide. Dans le cas où ce fluide est de l'air par exemple, on a ainsi un petit "coussin" d'air dans chaque chambre. Ceci permet d'obtenir un bon amortissement, ce qui ne serait pas le cas si les chambres 7A, 7B étaient de dimensions trop importantes. En effet, si la hauteur des chambres 7A, 7B était trop importante, ceci serait équivalent à l'absence du carter 6. On n'obtiendrait plus, alors, d'amortissement. A titre d'exemple, la hauteur des chambres 7A et 7B est voisine de la largeur du passage 8, ici de l'ordre de 0,05 à 0,1 mm.

Certains tests ont été réalisés avec le capteur selon l'invention. Un exemple de courbe obtenue est représenté en figure 5.

Comme cela a déjà été expliqué précédemment, la figure 5 représente le signal de sortie obtenu au niveau du circuit électronique, en fonction des fréquences auxquelles est soumis le dispositif. Si l'on compare la courbe en trait plein représentant les résultats obtenus sans amortissement ou presque et la courbe en traits mixtes représentant les résultats obtenus avec le capteur muni du dispositif d'amortissement selon l'invention, on constate que, grâce à ce dispositif, le pic de la fréquence de résonnance disparaît. La courbe en traits mixtes représente un amortissement recherché η de 0,6 et a été obtenue à la suite d'essais réalisés avec une masse 3 en aluminium de 9,5 g, l'ensemble du dispositif ayant été soumis à une accélération d'environ 1 g.

Lorsque le pic de la fréquence de résonnance disparaît, on évite les risques d'endommagement du capteur. En effet, si la poutre atteint sa fréquence de résonnance, elle se déplace d'une amplitude maximum et la masse 3 risque donc de venir buter violemment contre les deux parties d'extrémités tronconiques 14b, 14c du carter, tandis que la poutre et les quartz 4 sont très fortement sollicités.

Par ailleurs, on peut constater que la courbe en traits mixtes présente une zone sensiblement rectiligne entre 0 et fₒ, dans laquelle on peut effectuer des mesures sensiblement sans risques d'erreurs.

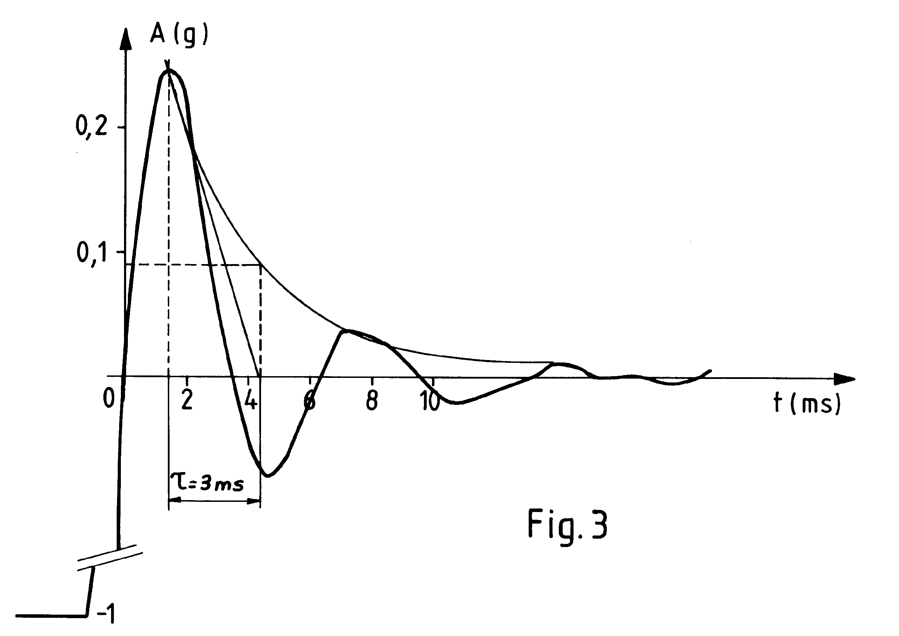

Enfin, comme illustré en figure 3, on notera que pour un test effectué dans les mêmes conditions que précédemment, la constante de temps est de 3 ms et qu'après 15 ms la poutre est revenue à sa position d'origine, ce qui permet d'effectuer alors une autre mesure.

Selon une autre variante de réalisation, on pourrait adapter très simplement l'accéléromètre décrit plus haut afin de réaliser un capteur de pression.

A cet effet, on pourrait envisager d'utiliser un capteur de pression comportant par exemple un élément mobile en fonction de la variation de la pression et agissant directement sur la masse 3. Un tel élément pourrait être une simple tige passant à travers l'ouverture 17 de passage de la goupille et dont l'extrémité supérieure viendrait au contact d'un soufflet soumis à des variations de pression. L'ouverture 17 serait alors rendue étanche tout en autorisant les déplacements axiaux de la tige.

## Revendications

1. Capteur de mesure d'une grandeur physique muni d'un dispositif d'amortissement, capteur du type comprenant un bâti (1), au moins un élément de forme générale allongée et déformable (2) sous l'action de ladite grandeur physique monté sur le bâti, une masse (3) reliée à l'élément déformable, un carter (6) entourant la masse et au moins partiellement l'élément déformable, ce carter étant fixé sur le bâti, et des moyens de mesure (4) montés sur l'élément déformable pour en mesurer la déformation, caractérisé en ce que la masse (3) a un axe de symétrie (X-X) sensiblement perpendiculaire à celui de l'élément déformable (2) et en ce que le carter (6) définit autour de la masse, d'une part, deux chambres de fluide (7A, 7B) dont les volumes respectifs varient de façon identique et antagoniste lors de la déformation de l'élément (2) et, d'autre part, au moins un passage (8), mettant en communication les deux chambres (7A, 7B) et opposant une résistance à l'écoulement du fluide d'une chambre à l'autre.

2. Capteur de mesure selon la revendication 1, caractérisé en ce que le passage (8) de mise en communication des deux chambres (7A, 7B) est périphérique et prévu entre la surface extérieure de la masse (3) et la surface intérieure du carter (6).

3. Capteur de mesure selon la revendication 1, caractérisé en ce que le carter (6) constitue des butées (19a, 19b) pour la masse (3).

4. Capteur de mesure selon la revendication 1, 2 ou 3, caractérisé en ce que le fluide est de l'air.

5. Capteur de mesure selon la revendication 1, 2 ou 3, caractérisé en ce que l'élément déformable (2) est une poutre, en ce que la masse (3) est constituée par au moins deux demi-masses (3A, 3B) fixées de part et d'autre de la poutre (2).

6. Capteur de mesure selon l'une quelconque des revendications précédentes, caractérisé en ce que la surface interne de chaque chambre de fluide (7A, 7B) présente une forme complémentaire à la partie correspondante de la masse (3).

7. Capteur de mesure selon la revendication 6, caractérisé en ce que la masse présente une axe de révolution (X-X) sensiblement perpendiculaire à l'axe longitudinal de l'élément déformable (2) et en ce que les surfaces complémentaires de chaque chambre (7A, 7B) et de la partie correspondante (11) de la masse (3) sont coaxiales, de même axe (X-X) que la masse et forment des surfaces de centrage de celle-ci.

8. Capteur de mesure selon la revendication 7, caractérisé en ce que les surfaces de centrage sont tronconiques.

9. Capteur de mesure selon l'une quelconque des revendications 5 à 8, caractérisé en ce que les deux demi-masses (3A, 3B) sont fixées sur la poutre (2) par au moins une goupille (9) traversant lesdites demi-masses sensiblement perpendiculairement à ladite poutre.

10. Capteur de mesure selon l'une quelconque des revendications précédentes, caractérisé en ce que le carter (6) est constitué par deux pots (6A, 6B) solidaires l'un de l'autre et jointifs par leurs bords et en ce qu'au moins l'un des pots possède des moyens de fixation (12) sur le bâti.

11. Capteur de mesure selon l'une quelconque des revendications prédécentes, caractérisé en ce que le carter (6) présente au moins une ouverture (15) pour le passage de l'élément déformable (2).

12. Capteur de mesure suivant l'une quelconque des revendications 9 à 11, caractérisé en ce que le carter (6) présente au moins une ouverture de passage (17) de la goupille (9).

13. Capteur de mesure selon la revendication 12, caractérisé en ce que ladite ouverture (17) est obstruée par un bouchon (18).

14. Capteur de mesure selon l'une quelconque des revendications précédentes, caractérisé en ce que l'élément déformable est une poutre (2) montée en porte-à-faux sur le bâti (1) et en ce que la masse (3) est montée sensiblement à l'extrémité libre de cette poutre (2).

15. Capteur de mesure selon l'une quelconque des revendications précédentes, caractérisé en ce que le carter (6A, 6B) est réalisé en matériau synthétique.

16. Capteur de mesure selon l'une quelconque des revendications précédentes, caractérisé en ce que la masse (3A, 3B) est en aluminium.

17. Capteur de mesure selon l'une quelconque des revendications précédentes, caractérisé en ce que l'élément déformable (2) est réalisé en acier au nickel-chrome.

18. Capteur de mesure selon l'une quelconque des revendications précédentes, caractérisé en ce que les moyens de mesure (4) montés sur l'élément déformable comportent deux résonateurs à quartz à double diapason montés de part et d'autre dudit élément déformable (2).

19. Capteur de mesure selon l'une quelconque des revendications précédentes, caractérisé en ce que le circuit électronique (5) est monté sur le bâti (1) et relié aux moyens de mesure (4).

## Patentansprüche

1. Mit einer Dämpfungseinrichtung versehener Sensor für eine physikalische Größe der Bauart mit einem Rahmen (1), mindestens einem Element in generell langgestreckter Form (2), das unter der Wirkung der physikalischen Größe deformierbar ist und an dem Rahmen montiert ist, wobei eine Masse (3) mit dem deformierbaren Element verbunden ist und ein Gehäuse (6) die Masse und mindestens Teile das deformierbare Element umschließt, welches Gehäuse an dem Rahmen befestigt ist, und mit Meßmitteln (4), die an dem defomierbaren Element montiert sind für die Messung der Deformation, dadurch gekennzeichnet, daß die Masse (3) eine Symmetrieachse (X-X) im wesentlichen senkrecht zu der des deformierbaren Elements (2) aufweist und daß das Gehäuse (6) um die Masse herum einerseits zwei Fluidkammern (7A, 7B) begrenzt, deren jeweilige Volumina sich in identischer, jedoch entgegengesetzter Richtung bei der Deformation des Elements (2) ändern, und andererseits mindestens einen Durchlaß (8) begrenzt, der die beiden Kammern (7A, 7B) in Kommunikation bringt und einen Widerstand für das Überströmen von Fluid aus einer Kammer in die andere darstellt.

2. Sensor nach Anspruch 1, dadurch gekennzeichnet, daß der Durchtritt (8) für das Kommunizierenlassen der beiden Kammern (7A, 7B) peripher ist und zwischen der Außenoberfläche der Masse (3) und der Innenoberfläche des Gehäuses (6) angeordnet ist.

3. Sensor nach Anspruch 1, dadurch gekennzeichnet, daß das Gehäuse (6) Anschläge (19a, 19b) für die Masse (3) bildet.

4. Sensor nach Anspruch 1, 2 oder 3, dadurch gekennzeichnet, daß das Fluid Luft ist.

5. Sensor nach Anspruch 1, 2 oder 3, dadurch gekennzeichnet, daß das deformierbare Element (2) ein Kragträger ist, daß die Masse (3) von mindestens zwei Halbmassen (3A, 3B) gebildet ist, die beidseits des Kragträgers (2) befestigt sind.

6. Sensor nach einem der vorangehenden Ansprüche, dadurch gekennzeichnet, daß die Innenoberfläche jeder Fluidkammer (7A, 7B) eine Form aufweist, die komplementär ist zu der entsprechenden Partie der Masse (3).

7. Sensor nach Anspruch 6, dadurch gekennzeichnet, daß die Masse eine Umlaufachse (X-X) aufweist, die im wesentlichen senkrecht zur Längsachse des deformierbaren Elements (2) verläuft, und daß die komplementären Oberflächen jeder Kammer (7A, 7B) und der entsprechenden Partie der Masse (3) koaxial sind mit derselben Achse (X-X) wie die Masse, und Zentrierflächen der letzteren bilden.

8. Sensor nach Anspruch 7, dadurch gekennzeichnet, daß die Zentrieroberflächen kegelstumpfförmig sind.

9. Sensor nach einem der vorangehenden Ansprüche 5 bis 8, dadurch gekennzeichnet, daß die beiden Halbmassen (3A, 3B) auf dem Kragträger (2) mittels mindestens eines Stiftes (9) befestigt sind, der die Halbmassen im wesentlichen senkrecht zu dem Kragträger durchsetzt.

10. Sensor nach einem der vorangehenden Ansprüche, dadurch gekennzeichnet, daß das Gehäuse (6) von zwei Töpfen (6A, 6B) gebildet ist, die miteinander fest verbunden sind und an ihren Lippen aufeinandertreffen, und daß mindestens einer der Töpfe Mittel zur Befestigung (12) an dem Rahmen besitzt.

11. Sensor nach einem der vorangehenden Ansprüche, dadurch gekennzeichnet, daß das Gehäuse (6) mindestens eine Öffnung (15) für den Durchtrit des deformierbaren Elements (2) aufweist.

12. Sensor nach einem der Ansprüche 9 bis 11, dadurch gekennzeichnet, daß das Gehäuse (6) mindestens eine Durchtrittsöffnung (17) des Stiftes (9) aufweist.

13. Sensor nach Anspruch 12, dadurch gekennzeichnet, daß die Öffnung (17) von einem Stopfen (18) abgesperrt ist.

14. Sensor nach einem der vorangehenden Ansprüche, dadurch gekennzeichnet, daß das deformierbare Element ein Kragträger (2) ist, der freitragend an dem Rahmen (1) montiert ist, und daß die Masse (3) im wesentlichen am freien Ende dieses Trägers (2) befestigt ist.

15. Sensor nach einem der vorangehenden Ansprüche, dadurch gekennzeichnet, daß das Gehäuse (6A, 6B) aus einem synthetischen Material hergestellt ist.

16. Sensor nach einem der vorangehenden Ansprüche, dadurch gekennzeichnet, daß die Masse (3A, 3B) aus Aluminium ist.

17. Sensor nach einem der vorangehenden Ansprüche, dadurch gekennzeichnet, daß das deformierbare Element (2) aus Stahl oder Nickelchrom hergestellt ist.

18. Sensor nach einem der vorangehenden Ansprüche, dadurch gekennzeichnet, daß das Meßmittel, das auf dem deformierbaren Element montiert ist, zwei Quarzresonatoren in Doppelstimmgabelform umfaßt, die beidseits des deformierbaren Elements (2) angebracht sind.

19. Sensor nach einem der vorangehenden Ansprüche, dadurch gekennzeichnet, daß der elektronische Schaltkreis (5) auf dem Rahmen (1) montiert ist und mit den Meßmitteln (4) verbunden ist.

## Claims

1. Sensor for measuring a physical magnitude provided with a damping arrangement, such sensor comprising a support (1), at least one element of generally elongated form deformable (2) under the action of said physical magnitude mounted on the support, a mass (3) coupled to the deformable element, a cover (6) surrounding the mass and at least partially surrounding the deformable element, such cover being secured on the support, and measuring means (4) mounted on the deformable element in order to measure the deformation thereof, characterized in that mass (3) has a symmetrical axis (X-X) substantially perpendicular to the latter of the deformable element and in that cover (6) defines, on the one hand, two fluid chambers (7A, 7B) around the mass the respective volumes of which vary in an eqaul and opposite manner during deformation of deformable element (2) and, on the other hand, at least one passage (8) placing the two chambers (7A, 7B) into communication and resisting the flow of the fluid from one chamber to the other.

2. Sensor according to claim 1, characterized in that passage (8) providing communication between the two chambers (7A, 7B) is peripheral and is provided between the outer surface of mass (3) and the inner surface of cover (6).

3. Sensor according to claim 1, characterized in that cover (6) forms abutments (19a, 19b) for mass (3).

4. Sensor according to claim 1, 2 or 3, characterized in that the fluid is air.

5. Sensor according to claim 1, 2 or 3, characterized in that deformable element (2) is a beam, in that mass (3) is formed by at least two half-masses (3A, 3B) fastened on either side of beam (2).

6. Sensor according to any one of the preceding claims, characterized in that the inner surface of each fluid chamber (7A, 7B) exhibits a form which is complementary to the corresponding part of mass (3).

7. Sensor according to claim 6, characterized in that the mass exhibits an axis of revolution (X-X) substantially perpendicular to the longitudinal axis of deformable element (2) and in that the complementary surfaces of each chamber (7A, 7B) and of corresponding part (11) of mass (3) are coaxial, of the same axis (X-X) as the mass and form centering surfaces for the latter.

8. Sensor according to claim 7, characterized in that the centering surfaces are tapered.

9. Sensor according to any one of claims 5 to 8, characterized in that the two half-masses (3A, 3B) are secured onto the beam (2) by at least one pin (9) traversing said half-masses substantially perpendicular to said beam.

10. Sensor according to any one of the preceding claims, characterized in that cover (6) is formed by two vessels (6A, 6B) fixed to one another and abutting at their edges, and in that at least one of the vessels has means (12) for fixing it to the support.

11. Sensor according to any one of the preceding claims, characterized in that cover (6) exhibits at least one opening (15) for the passage of deformable element (2).

12. Sensor according to any one of claims 9 to 11, characterized in that cover (6) presents at least one accommodation opening (17) for pin (9).

13. Sensor according to claim 12, characterized in that said accommodation opening (17) is blocked by a plug (18).

14. Sensor according to any one of the preceding claims, characterized in that the deformable element is a beam (2) mounted in cantilever onto support (1) and in that mass (3) is mounted substantially at the free end of said beam (2).

15. Sensor according to any one of the preceding claims, characterized in that cover (6A, 6B) is formed of synthetic material.

16. Sensor according to any one of the preceding claims, characterized in that mass (3A, 3B) is of aluminium.

17. Sensor according to any one of the preceding claims, characterized in that deformable element (2) is formed of nickel-chromium steel.

18. Sensor according to any one of the preceding claims, characterized in that measuring means (4) mounted on the deformable element include two double tuning fork quartz resonators mounted on either side of said deformable element (2).

19. Sensor according to any one of the preceding claims, characterized in that electronic circuit (5) is mounted on support (1) and coupled to measuring means (4).
